# EUROPÄISCHE PATENTSCHRIFT

(11) **EP 2 962 894 B1**
(45) Veröffentlichungstag und Bekanntmachung des Hinweises auf die Patenterteilung: **04.10.2017**
(21) Anmeldenummer: 15173654.3
(22) Anmeldetag: 24.06.2015
(51) Int. Cl.: B60N 2/28, B60N 2/42, B60N 2/427

(54) **KINDERSICHERHEITSSITZ**
CHILD SAFETY SEAT
SIÈGE DE SÉCURITÉ POUR ENFANT

(30) Priorität: 01.07.2014 DE 102014109219
(43) Veröffentlichungstag der Anmeldung: 06.01.2016
(73) Patentinhaber: CYBEX GmbH, 95448 Bayreuth (DE)
(72) Erfinder: Pos, Martin, 95444 Bayreuth (DE)
(74) Vertreter: Popp, Eugen

(56) Entgegenhaltungen:
- WO-A1-2014/053009
- US-A1- 2009 121 400
- US-A1- 2012 242 129

## Beschreibung

Die Erfindung betrifft einen Kindersicherheitssitz mit seitlich durch Seitenwände begrenzten Sitzbereich, Rückenlehne und ggf. Kopfstütze, insbesondere Kindersicherheitssitz für Säuglinge und Kinder bis 14 Jahre mit einer ein Kopfende und ein Fußende aufweisenden Sitz/-liegeschale, welche in Seitenbereichen hochgezogene Seitenwände aufweist, wobei wenigstens im Bereich der Seitenwände wenigstens eine energieabsorbierende Maßnahme vorgesehen ist, gemäß Anspruch 1.

Aus dem Stand der Technik sind zahlreiche Kindersicherheitssitze bekannt. Diese dienen insbesondere dem sicheren Transport von Kindern in Fahrzeugen wie z. B. Kraftfahrzeugen. Im Falle eines Unfalls des Kraftfahrzeuges ist der Kopf des darin in einem Kindersicherheitssitz befindlichen Säuglings bzw. Kindes ein besonders gefährdeter Bereich. Hier gilt es besondere konstruktive Vorkehrungen zu treffen, um den Kopf des Kindes bei einem Unfall des Kraftfahrzeuges bestmöglich zu schützen. Auch im Bereich der Rückenlehne bzw. des Sitzbereiches eines Kindersicherheitssitzes sind vorzugsweise derartige konstruktive Vorkehrungen zu treffen, um den Säugling und/oder das Kind entlang des Rücken- und Sitzbereiches bestmöglich vor, auf das Kind bzw. den Säugling einwirkenden, Kräften schützen zu können.

Ein Kindersicherheitssitz nach dem Oberbegriff des Anspruchs 1 ist z.B. aus dem Dokument WO 2014/053009 A1 bekannt.

Aus dem Vorgenannten liegt der Erfindung die Aufgabe zugrunde, einen weiterentwickelten, einen besonders hohen Schutz bietenden Kindersicherheitssitz für einen Säugling oder ein Kind bis 14 Jahre bereitzustellen.

Die beschriebene Aufgabe wird zunächst durch einen Kindersicherheitssitz gemäß Anspruch 1 gelöst.

Demnach ist ein Kindersicherheitssitz mit seitlich durch Seitenwände begrenzten Sitzbereich, Rückenlehne und ggf. Kopfstütze, insbesondere ein Kindersicherheitssitz für Säuglinge und Kinder bis 14 Jahre, mit einer ein Kopfende und ein Fußende aufweisenden Sitz/-liegeschale, welche in Seitenbereichen hochgezogene Seitenwände aufweist, wobei wenigstens im Bereich der Seitenwände wenigstens eine energieabsorbierende Maßnahme vorgesehen ist, angegeben. Bei Kindersicherheitssitzen ist in den überwiegenden Fällen standardmäßig von einer ausgebildeten Kopfstütze auszugehen. Oftmals weisen Kindersicherheitssitze für Säuglinge und Kinder bis 14 Jahre eine Sitz/- liegeschale auf, die ein Kopfende, ein Fußende, sowie in Seitenbereichen hochgezogene Seitenwände umfasst. Der erfindungsgemäße Kindersicherheitssitz beruht darauf, dass wenigstens im Bereich der Seitenwände wenigstens eine energieabsorbierende Maßnahme vorgesehen ist.

Die Sitz/-liegeschale kann beispielsweise aus Kunststoff und/oder Metall und/oder Holz gebildet sein.

Erfindungsgemäß ist die wenigstens eine energieabsorbierende Maßnahme in Form von wenigstens einer an einer Seitenwand von Sitzbereich und/oder Rückenlehne und/oder Kopfstütze angeordnete Energieabsorptionseinheit mit sich etwa senkrecht und/oder parallel zur Erstreckung der Seitenwand erstreckenden, Deformationselementen, insbesondere Deformationsvor- und/oder rücksprüngen, ausgebildet. Mit anderen Worten ist die energieabsorbierende Maßnahme eine Energieabsorptionseinheit, die an wenigstens einer Seitenwand des Sitzbereichs und/oder der Rückenlehne und/oder Kopfstütze ausgebildet ist. Die wenigstens eine Energieabsorptionseinheit umfasst sich etwa senkrecht und/oder ggf. parallel zur Erstreckung der Seitenwand erstreckende Deformationselemente, insbesondere Deformationsvor- und/oder rücksprünge. Die Deformationselemente, insbesondere die Deformationsvor- und/oder rücksprünge können bei einer Unfallsituation deformieren und entsprechend Energie absorbieren.

Durch die Deformierung wird die Aufprallenergie abgebaut und die Beschleunigung auf Körperteile des im Kindersicherheitssitz befindlichen Säuglings bzw. Kindes reduziert.

Die wenigstens eine Energieabsorptionseinheit ist als dreidimensional geformter Formkörper ausgebildet, insbesondere aus einer Folie, insbesondere aus Kunststoff und/ oder Karton und/oder Metall. Der dreidimensional geformte Formkörper umfasst eine Grundfläche sowie aus dieser heraus geformte Vor- und/oder Rücksprünge, die bei Energieaufnahme deformierbar sind.

Die Vor- und/oder Rücksprünge können beispielsweise zapfen- oder stegartig ausgebildet sein. Dies ist keine abschließende Aufzählung möglicher Ausbildungsformen der Vor- oder/oder Rücksprünge. Hier sind eine Vielzahl von Ausbildungsmöglichkeiten und/oder geometrische Formen denkbar. Beispielsweise können die Vor- und/oder Rücksprünge auch rohrartig ausgebildet sein. Vorzugsweise weisen die Vor- und/oder Rücksprünge eine größere Längserstreckung als Quererstreckung auf. Die Längserstreckung definiert die Tiefe der sich etwa senkrecht und/oder parallel zu einer Seitenwand erstreckenden Deformationselemente bzw. Deformationsvor- und/oder rücksprünge. Die Quererstreckung der Vor- und/oder Rücksprünge bzw. der Deformationsvor- und/oder rücksprünge begrenzt den Querschnitt dieser Deformationselemente. Derartige Vor- und/oder Rücksprünge bzw. Deformationsvor- und/oder rücksprünge können im Falle eines Aufpralls einen sehr hohen Anteil der Aufprallenergie abbauen; beispielsweise kann die Beschleunigung auf ein Körperteil des Säuglings bzw. des Kindes, insbesondere die Beschleunigung auf den Kopf des Säuglings oder Kindes, um etwa die Hälfte reduziert werden. An wenigstens einem Rand der Grundfläche des dreidimensional geformten Formkörpers ist aus dieser eine Seitenwand hochgezogen, so dass zusammen mit der Grundfläche eine Art "Absorptionsbox bzw. Absorptionsschachtel" entsteht bzw. gebildet wird.

Vorzugsweise sind an mindestens zwei Rändern der Grundfläche des dreidimensional geformten Formkörpers Seitenwände ausgebildet und hochgezogen.

An wenigstens einer Seitenwand des dreidimensional geformten Formkörpers können sich stegartige bzw. zapfenartige oder rohrartige Vorsprünge erstrecken, die sich demnach ebenfalls etwa senkrecht zur Erstreckung der Seitenwand des Kindersicherheitssitzes erstrecken, und damit ähnlich energieabsorbierend wirken wie die aus der Grundfläche heraus geformten Vor- und/oder Rücksprünge. Die Energieabsorptionseinheit ist jeweils Teil eines gesonderten Seitenwandelements, welches an der dem Körper und/oder Kopf des Kindes zugewandten Seite der Seitenwand von Rückenlehne und/oder Sitzbereich und/oder Kopfstütze in diese einfügbar und austauschbar ausgebildet ist.

Mit anderen Worten kann die Energieabsorptionseinheit als separates Bauteil ausgebildet sein, das in eine entsprechende Ausnehmung der Rückenlehne und/oder des Sitzbereichs und/oder der Kopfstütze einfügbar und ggf. austauschbar ist. Um eine sichere Befestigung der Energieabsorptionseinheit in einer Seitenwand und/oder des Sitzbereichs und/oder der Kopfstütze zu schaffen, kann die Energieabsorptionseinheit Befestigungsmittel aufweisen, die korrespondierend zu Befestigungsmitteln der Seitenwand der Rückenlehne und/oder des Sitzbereichs und/oder der Kopfstütze ausgebildet sind. Beispielsweise kann die Energieabsorptionseinheit mittels Nut-Feder-Verbindung mit der Seitenwand bzw. innerhalb einer Ausnehmung der Seitenwand verbunden werden. Die Ausbildung einer derartigen Nut-Feder-Verbindung kann variabel sein, d. h. die Nut kann sowohl an der Energieabsorptionseinheit als auch in der Seitenwand bzw. in der Aussparung der Seitenwand ausgebildet sein. Gleiches gilt für die Feder.

Insbesondere sind in den Seitenwänden des Sitzbereichs und/oder der Rückenlehne und/oder der Kopfstütze mindestens zwei Energieabsorptionseinheiten vorgesehen, welche einander zugekehrt symmetrisch zu einer gedachten Mittel-Längsachse des Kindersitzes angeordnet sind. Insbesondere gilt dies für die Ausbildung einer energieabsorbierenden Maßnahme im Bereich der Seitenwand bzw. Seitenwange einer Kopfstütze; denn primär gilt es, die Beschleunigung des Kopfes eines Säuglings bzw. eines Kindes bei einem Aufprall zu schützen.

Die box- bzw. schachtelartige Form des Körpers aus Kunststoff und/oder Karton und/oder Metall bzw. einer Folie aus Kunststoff und/oder Karton und/oder Metall kann demnach auch lediglich in Grund- und/oder Seitenflächen ausgebildete Perforationen aufweisen. Die ausgebildeten Perforationen ermöglichen ein vorab definiertes Verformen der Grund- und/oder Seitenflächen, so dass aufgrund der Verformung der Grund- und/oder Seitenflächen eine im Falle eines Aufpralls wirkende Aufprallenergie abgebaut wird und die Beschleunigung auf Körperteile des in einem erfindungsgemäßen Kindersicherheitssitzes befindlichen Säuglings- und/oder Kindes reduziert wird.

Die Perforationen können auch als Ausnehmungen bezeichnet werden. Die Perforationen bzw. Ausnehmungen können einen runden und/oder elliptischen und/oder einen rechteckigen und/oder einen quadratischen und/oder einen polygonalen Querschnitt aufweisen. Die Anordnung der Aussparungen bzw. Perforationen zueinander kann variabel gestaltet sein. Vorzugsweise sind in der Energieabsorptionseinheit mindestens drei, insbesondere mindestens vier, insbesondere mindestens fünf, insbesondere mindestens sechs, insbesondere mindestens sieben, Perforationen bzw. Ausnehmungen ausgebildet. Die Anordnung der Perforationen bzw. Ausnehmungen zueinander erfolgt vorzugsweise in einer derartigen Art und Weise, dass die mit den Perforationen bzw. Ausnehmungen versehene Grund- und/oder Seitenfläche im Falle eines Aufpralls maximal deformierbar ist und somit eine maximal mögliche Aufprallenergie abbauen kann.

Es kann folglich ein Kindersicherheitssitz mit mindestens einer austauschbaren Energieabsorptionseinheit gebildet werden. Nach einem Aufprall bzw. einer Deformation der Energieabsorptionseinheit kann der erfindungsgemäße Kindersicherheitssitz folglich mit einer neuen Energieabsorptionseinheit versehen werden.

Insbesondere sind in den Seitenwänden des Sitzbereichs und/oder der Rückenlehne und/oder der Kopfstütze mindestens zwei

Energieabsorptionseinheiten vorgesehen, welche einander zugekehrt symmetrisch zu einer gedachten Mittel-Längsachse des Kindersitzes angeordnet sind. Insbesondere gilt dies für die Ausbildung einer energieabsorbierenden Maßnahme im Bereich der Seitenwand bzw. Seitenwange einer Kopfstütze.

Weitere Ausführungsformen der Erfindung ergeben sich aus den Unteransprüchen und Kombinationen selbiger.

Nachfolgend wir die Erfindung anhand eines Ausführungsbeispiels beschrieben, das anhand der Abbildungen näher erläutert wird. Hierbei zeigen:
- Fig. 1a: eine erfindungsgemäß ausgebildete Seitenwand bzw. Seitenwange einer Kopfstütze mit integrierter Energieabsorptionseinheit in perspektivischer Ansicht;
- Fig. 1b und c: die Seitenwange gemäß Fig. 1 einer Kopfstütze bei der die Energieabsorptionseinheit entfernt ist, in Seiten- und Schrägansicht;
- Fig. 2a, b: eine Energieabsorptionseinheit, wie sie Teil der Seitenwange gemäß Fig. 1 ist, in Seiten- und Innenansicht;
- und Fig. 3: eine seitliche Draufsicht auf eine Energieabsorptionseinheit gemäß einer weiteren Ausführungsform.

In der nachfolgenden Beschreibung werden für gleiche und gleichwirkende Teile dieselben Bezugsziffern verwendet.

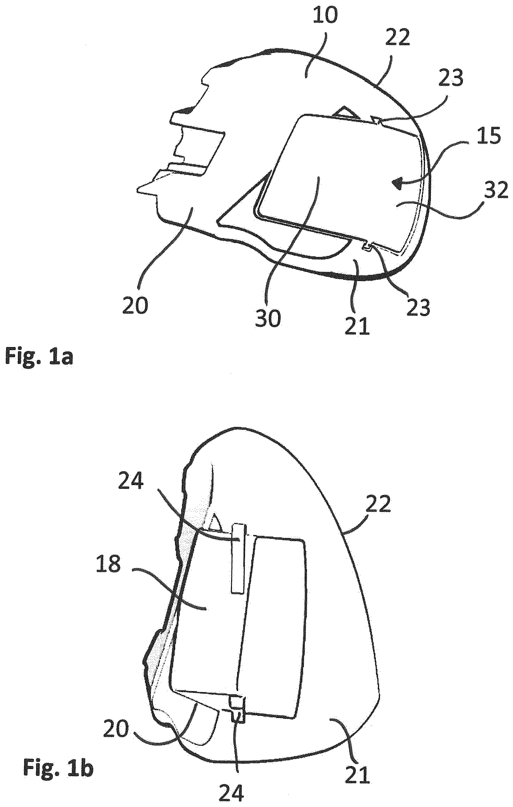

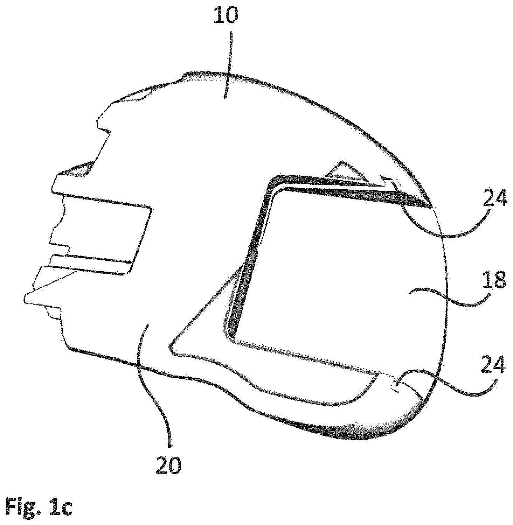

Fig. 1 zeigt eine Seitenwange 10 einer erfindungsgemäß ausgebildeten Kopfstütze, wobei die Seitenwange 10 einer Kopfstütze als Seitenwand einer Kopfstütze bezeichnet werden kann. Die erfindungsgemäße Kopfstütze weist wenigstens im Bereich der Seitenwände bzw. im Bereich der Seitenwangen 10 jeweils wenigstens eine energieabsorbierende Maßnahme auf. Diese energieabsorbierende Maßnahme ist in Form einer an einer Seitenwand bzw. Seitenwange 10 der Kopfstütze angeordnete Energieabsorptionseinheit 15 ausgebildet. In der dargestellten Ausführungsform bildet die Energieabsorptionseinheit 15 ein separates Bauteil bzw. ist als gesondertes Seitenwandelement zu verstehen. Die Energieabsorptionseinheit 15 ist an der dem Kopf des Säuglings oder des Kindes zugewandten Seite 20 der Seitenwange 10 angeordnet. Die Energieabsorptionseinheit 15 fügt sich oberflächenbündig in die Seitenwange 10 ein. Die freie, dem Kopf eines Kindes zugewandte Oberfläche der Energieabsorptionseinheit 15 ist also mit der entsprechenden Oberfläche 21 der Seitenwange 10 bündig.

Die Energieabsorptionseinheit 15 kann durch einen aus einem Körper, insbesondere aus einer Folie, aus Kunststoff und/oder Karton und/oder Metall dreidimensional geformten Formkörper gebildet sein. Die Energieabsorptionseinheit 15 kann beispielsweise aus dem gleichen Material wie die Seitenwange 10 gebildet sein. Auch eine unterschiedliche Materialauswahl diesbezüglich ist denkbar. Die Energieabsorptionseinheit 15 ist im dargestellten Beispiel als separates Bauteil zu verstehen. Demnach handelt es sich um ein gesondertes Seitenwandelement bzw. die Energieabsorptionseinheit 15 ist in die Seitenwand bzw. Seitenwange 10 der Kopfstütze einfügbar. So ist es möglich, defekte Energieabsorptionseinheiten 15 bzw. gebrauchte Energieabsorptionseinheiten 15 auszutauschen und durch neue bzw. unbeschädigte Energieabsorptionseinheiten zu ersetzen. Um eine Arretierung der Energieabsorptionseinheit 15 mit der Seitenwange 10 der Kopfstütze zu ermöglichen, weist die Energieabsorptionseinheit 15 Befestigungsmittel 23 auf. Diese Befestigungsmittel 23 korrespondieren zu Befestigungs- bzw. Arretierungsmitteln 24 der Seitenwange 10 bzw. Seitenwand (s. hierzu Fig. 1b).

Im dargestellten Beispiel ist die Befestigung bzw. Arretierung der Energieabsorptionseinheit 15 an der Seitenwange 10 durch eine Nut-Feder-Verbindung realisiert. Das Befestigungsmittel 23 der Energieabsorptionseinheit 15 ist gemäß der in den Fig. 1a bis 1c dargestellten Ausführungsform als längliche Feder ausgebildet. In einer Ausnehmung 18 der Seitenwange 10 sind zu den Federn 23 korrespondierende Aussparungen bzw. Nuten 24 ausgebildet.

Theoretisch ist es denkbar, die Nut-Feder-Verbindung auch in umgekehrter Wirkweise auszubilden, d. h. dass die Feder an der Seitenwange 10, insbesondere innerhalb der Ausnehmung 18 ausgebildet ist, wohingegen die Energieabsorptionseinheit 15 mit entsprechenden Nuten versehen ist.

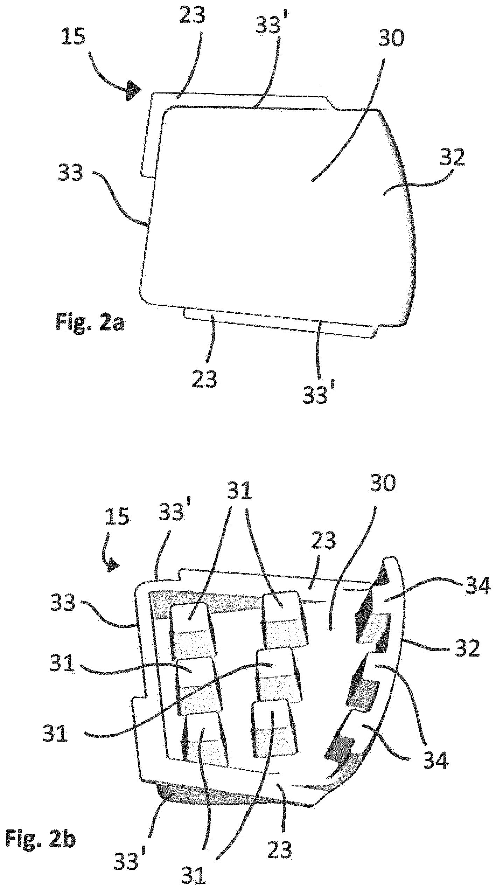

Aus den Fig. 2a und 2b geht hervor, dass die Energieabsorptionseinheit 15 als dreidimensional geformter Formkörper ausgebildet ist. Dieser kann beispielsweise durch Ausformung eines Körpers, insbesondere einer Folie, aus Kunststoff und/oder Karton und/oder Metall gebildet sein. Der dreidimensional geformte Formkörper weist eine Grundfläche 30 sowie aus dieser Grundfläche 30 herausgeformte Vorsprünge 31 auf. Die Vorsprünge 31 sind bei Energieaufnahme deformierbar. Die Vorsprünge 31 sind zapfenartig ausgebildet, d. h. die Grundfläche der Vorsprünge ist im Wesentlichen quadratisch ausgebildet. Die Längserstreckung bzw. Tiefe der herausgeformten Vorsprünge 31 ist größer als die Quererstreckung, d. h. größer als deren Grundflächenquerschnitt.

Die Deformationsvorsprünge 31 sind beispielsweise bei Formung aus einer Folie hohl ausgebildet. Die Ausfüllung der Vorsprünge 31 mit plastisch verformbarem Material, z. B. PU-Schaum oder dergleichen ist denkbar. Die Deformationsvorsprünge 31 erstrecken sich im dargestellten Beispiel etwa senkrecht zur Grundfläche 30 der Energieabsorptionseinheit 15. In alternativen Ausführungsformen ist es auch denkbar, dass sich die Deformationsvorsprünge etwa parallel zur Grundfläche einer Energieabsorptionseinheit erstrecken. Da die Grundfläche 30 sich etwa parallel zu der dem Kopf eines Kindes zugewandten Seite 20 der Seitenwange 10 erstreckt (s. Fig. 1a), sind die Vorsprünge 31 demnach etwa senkrecht zur Erstreckung der Seitenwand bzw. Seitenwange 10 ausgerichtet. An dem in Fig. 2b dargestellten rechten Rand der Grundfläche 30 des dreidimensional geformten Formkörpers bzw. der Energieabsorptionseinheit 15 ist eine Seitenwand 32 hochgezogen. An der zur Seitenwand 32 gegenüberliegenden Seite der Grundfläche 30 ist ebenfalls eine Seitenwand 33 hochgezogen. Zusammen mit den sich quer dazu erstreckenden Seitenwänden 33' wird ein dreidimensional geformter Formkörper nach Art einer Absorptionsbox bzw. einer Absorptionsschachtel gebildet. An der dem Kopf zugewandten Seite der Grundfläche 30 sind die dort ausgebildeten Öffnungen zu den Deformationsvorsprüngen 31 durch eine Deckfolie verschlossen, so dass an dieser Seite eine durchgehend glatte Oberfläche entsteht (s. Fig. 1a). Alternativ oder abschnittsweise zusätzlich kann die Oberfläche auch strukturiert und/oder aufgeraut ausgebildet sein.

An der in Fig. 2b rechten Seitenwand 32 sind stegartige Vorsprünge 34 ausgebildet bzw. ausgeformt, die sich etwa parallel zu den aus der Grundfläche 30 herausgeformten Vorsprüngen 31 erstrecken. Die drei stegartigen Vorsprünge 34 sind integraler Bestandteil der Seitenwand 32 und bilden somit einen Teil der Seitenwand 32. Auch diese stegartigen Vorsprünge 34 sind bei Energieaufnahme deformierbar. Insgesamt weist die Energieabsorptionseinheit 15 demnach neun Vorsprünge auf, wobei sechs Deformationsvorsprünge 31 aus der Grundfläche 30 und drei Vorsprünge 34 aus der Seitenwand 32 herausgeformt sind.

Die Energieabsorptionseinheit 15 bzw. der dreidimensional geformte Formkörper weist im Wesentlichen eine rechteckige Form auf, wobei die eine Seitenwand 32 leicht bogenförmig verläuft entsprechend der Kontur der zugeordneten Seitenwand bzw. Seitenwange 10 der Kopfstütze im Bereich der Ausnehmung, in die die Energieabsorptionseinheit 15 eingefügt werden soll.

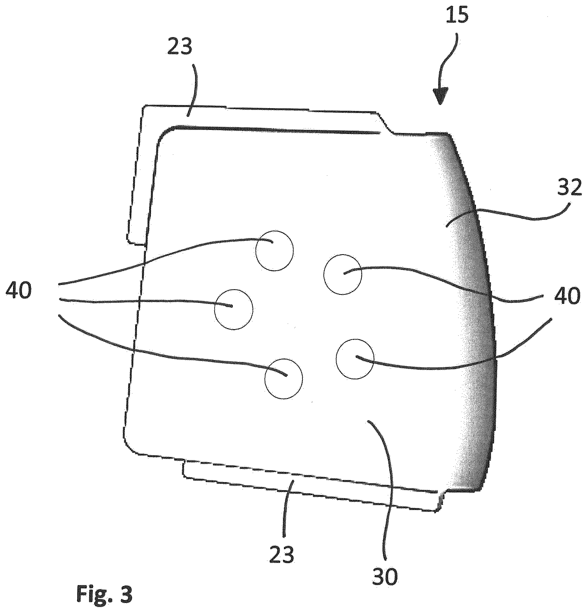

In Fig. 3 wird eine weitere Ausführungsform einer Energieabsorptionseinheit dargestellt. Diese ist als ein box- bzw. schachtelartig geformter Körper aus Kunststoff und/oder Karton und/oder Metall ausgebildet, wobei in der Grundfläche 30 der Energieabsorptionseinheit 15 Perforationen 40 ausgebildet sein. Beispielsweise ist es denkbar, dass der box- bzw. schachtelartig geformte Körper ursprünglich eine Folie ist.

Die Perforationen bzw. Aussparungen bzw. Ausnehmungen können gleichartig ausgebildet sein. Im dargestellten Ausführungsbeispiel sind die Perforationen 40 jeweils kreisrund ausgebildet. Die in Fig. 3 fünf kreisrunden Perforationen 40 sind in etwa auf einer Kreislinie liegend ausgebildet. Die dargestellte Energieabsorptionseinheit 15 kann zusätzlich mit aus der Grund- bzw. Bodenfläche 30 herausgeformten Vor- und/oder Rücksprüngen ausgebildet sein. Die Ausbildung von Perforationen und/oder Vor- und/oder Rücksprüngen auch im Bereich der rundseitig hochgezogenen Seitenwände 32 der schachtelartigen Energieabsorptionseinheit 15 ist denkbar.

Die kreisrunde Ausbildung der Perforationen 40 ist lediglich eine beispielhafte Darstellung. Die Perforationen können auch rechteckige und/oder elliptische und/oder quadratische und/oder polygonale Querschnitte aufweisen. Auch die Anordnungen der Perforationen 40 zueinander ist variabel und kann beispielsweise in Abhängigkeit der Position der Energieabsorptionseinheit 15 im erfindungsgemäßen Kindersicherheitssitz gestaltet werden.

Die in Fig. 3 dargestellte Ausführungsform einer möglichen Energieabsorptionseinheit 15 ist als gesondertes Bauteil ausgebildet und somit in die Seitenwand bzw. in die Seitenwange 10 einer Kopfstütze einsetzbar.

Insbesondere können Energieabsorptionseinheiten der beschriebenen Art auch an geeigneten Stellen von Seiten- und/oder Rückwand eines Kindersitzes angeordnet sein.

### Bezugszeichenliste

- 10: Seitenwange/Seitenwand
- 15: Energieabsorptionseinheit
- 18: Ausnehmung
- 20: Kopf abgewandte Seite
- 21: Frontfläche
- 22: Kopf zugewandte Seite
- 23: Befestigungsmittel Energieabsorptionseinheit
- 24: Befestigungsmittel Seitenwange
- 30: Grundfläche
- 31: (Deformations)vorsprünge
- 32: Seitenwand
- 33, 33': Seitenwand
- 34: Vorsprünge
- 40: Perforation

## Patentansprüche

1. Kindersicherheitssitz mit seitlich durch Seitenwände begrenzten Sitzbereich, Rückenlehne, und ggf. Kopfstütze, insbesondere Kindersicherheitssitz für Säuglinge und Kinder bis 14 Jahre, mit einer ein Kopfende und ein Fußende aufweisenden Sitz/-liegeschale, welche in Seitenbereichen hochgezogene Seitenwände aufweist, wobei wenigstens im Bereich der Seitenwände des Kindersicherheitssitzes wenigstens eine energieabsorbierende Maßnahme
in Form von wenigstens einer an einer Seitenwand (10) des Sitzbereichs und/oder der Rückenlehne und/oder der Kopfstütze angeordneten Energieabsorptionseinheit (15) mit sich etwa senkrecht und/oder parallel zur Erstreckung der Seitenwand (10) erstreckenden Deformationsvor- und/oder rücksprüngen vorgesehen ist, **dadurch gekennzeichnet, dass**
die Energieabsorptionseinheit (15) als dreidimensional geformter Formkörper ausgebildet ist, der eine Grundfläche (30) sowie aus dieser herausgeformte Deformationsvor- und/oder rücksprünge (31) umfasst, die bei Energieaufnahme deformierbar sind, wobei
an wenigstens einem Rand der Grundfläche (30) des dreidimensional geformten Formkörpers aus dieser eine Seitenwand (32, 33, 33') hochgezogen ist, sodass eine Art "Absorptionsbox bzw. Absorptionsschachtel" entsteht, die als gesondertes Seitenwandelement in die Seitenwand (10) der Rückenlehne und/oder des Sitzbereichs und/oder der Kopfstütze einfügbar und austauschbar ist.

2. Kindersicherheitssitz nach Anspruch 1,
**dadurch gekennzeichnet, dass** der dreidimensional geformte Formkörper der Energieabsorptionseinheit (15), insbesondere aus einer Folie, aus Kunststoff und/oder Karton und/oder Metall gebildet ist.

3. Kindersicherheitssitz nach einem der vorangegangenen Ansprüche, **dadurch gekennzeichnet, dass**
die Deformationsvor- und/oder rücksprünge (31) rohr-, zapfen- oder stegartig ausgebildet sind.

4. Kindersicherheitssitz nach einem der vorangegangenen Ansprüche, **dadurch gekennzeichnet, dass**
an der wenigstens einen Seitenwand (32) stegartige Vorsprünge (34) ausgebildet bzw. angeformt sind, die sich etwa parallel zu den aus der Grundfläche (30) herausgeformten Deformationsvor- und/oder rücksprüngen (31) erstrecken.

## Claims

1. A child safety seat having a seat area laterally delimited by side walls, a backrest and possibly a headrest, in particular a child safety seat for babies and children up to the age of 14, having a seat/lying shell with a head end and a foot end which has elevated side walls in side regions, wherein at least in the region of the side walls of the child safety seat, at least one energy-absorbing measure
is provided in the form of at least one energy absorption unit (15) arranged on a side wall (10) of the side region and/or of the backrest and/or of the headrest having deformation projections and/or recesses extending roughly perpendicularly and/or parallel to the extension of the side wall (10),
**characterized in that**
the energy absorption unit (15) is configured as a three-dimensionally shaped moulded body which comprises a base area (30) and also deformation projections and/or recesses (31) formed therefrom, which are deformable during energy absorption, wherein
on at least one edge of the base area (30) of the three-dimensionally shaped moulded body, a side wall (32, 33, 33') is elevated therefrom, so that a kind of "absorption box" is created which can be inserted and exchanged as a separate side wall element in the side wall (10) of the backrest and/or of the seat region and/or of the headrest.

2. The child safety seat according to claim 1,
**characterized in that**
the three-dimensionally shaped moulded body of the energy absorption unit (15) is, in particular, formed from a film, from plastic and/or cardboard and/or metal.

3. The child safety seat according to one of the preceding claims,
**characterized in that**
the deformation projections and/or recesses (31) have a tube-like, pin-like or web-like configuration.

4. The child safety seat according to one of the preceding claims, **characterized in that**
on the at least one side wall (32), web-like projections (34) are formed or moulded which extend roughly parallel to the deformation projections and/or recesses (31) formed from the base area (30).

## Revendications

1. Siège de sécurité pour enfant avec une assise, un dossier et le cas échéant un appuie-tête limités latéralement par des parois latérales, notamment siège de sécurité pour enfant pour des nourrissons et des enfants jusqu'à 14 ans, avec une coque d'assise/de couchage comportant une extrémité de tête et une extrémité de pied, laquelle comporte dans des régions latérales des parois latérales surhaussées, au moins dans la région des parois latérales du siège de sécurité pour enfant étant prévue au moins une mesure d'absorption d'énergie sous la forme d'au moins une unité d'absorption d'énergie (15) placée sur une paroi latérale (10) de l'assise et/ou du dossier et/ou de l'appuie-tête, avec des saillies et/ou des retraits de déformation s'étendant approximativement à la perpendiculaire et/ou à la parallèle de l'extension de la paroi latérale (10), **caractérisé en ce que**
l'unité d'absorption d'énergie (15) est conçue sous la forme d'un corps moulé façonné en trois dimensions, qui comprend une surface de base (30) des saillies et/ou des retraits de déformation (31) façonnés à partir de cette dernière qui sont déformables lors d'une absorption d'énergie, sur au moins un bord de la surface de base (30) du corps moulé façonné en trois dimensions, une paroi latérale (32, 33, 33') étant surhaussée à partir de celle-ci, de sorte à donner naissance à une sorte de caisse d'absorption ou boîte d'absorption, qui en tant qu'élément de paroi latérale séparé est insérable dans la paroi latérale (10) du dossier et/ou de l'assise et/ou de l'appuie-tête et qui est interchangeable.

2. Siège de sécurité pour enfant selon la revendication 1,
**caractérisé en ce que**
le corps moulé façonné en trois dimensions de l'unité d'absorption d'énergie (15),
est formé notamment par un film,
en matière plastique et/ou en carton et/ou en métal.

3. Siège de sécurité pour enfant selon l'une quelconque des revendications précédentes, **caractérisé en ce que**
les saillies et/ou retraits de déformation (31) sont conçus en forme de tubes, de tenons ou de barrettes.

4. Siège de sécurité pour enfant selon l'une quelconque des revendications précédentes, **caractérisé en ce que**
sur l'au moins une paroi latérale (32) sont conçues ou surmoulées des saillies (34) en forme de barrettes, qui s'étendent approximativment à la parallèle des saillies et/ou retraits de déformation (31) façonnés à partir de la surface de base (30).
